(19)

**Europäisches Patentamt**

**European Patent Office**

**Office européen des brevets**

(11) **EP 4 137 983 A1**

(12) **EUROPEAN PATENT APPLICATION**

(43) Date of publication:
**22.02.2023 Bulletin 2023/08**

(21) Application number: **22175284.3**

(22) Date of filing: **25.05.2022**

(51) International Patent Classification (IPC):
**G06F 30/27** *(2020.01)* **G07C 5/08** *(2006.01)*
**G06F 119/02** *(2020.01)*

(52) Cooperative Patent Classification (CPC):
**G06F 30/27; G07C 5/0808;** G06F 2119/02

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2021 US 202163230903 P**

(71) Applicant: **Deere & Company**
**Moline, IL 61265 (US)**

(72) Inventor: **SINGH, Brij N.**
**Moline, 61265 (US)**

(74) Representative: **Invent Horizon IP**
**Nordenskiöldsgatan 11A**
**211 19 Malmö (SE)**

(54) **SYSTEMS AND METHODS FOR ASSESSING DEGRADATION IN DRIVE COMPONENTS**

(57) In at least one example embodiment, a computer system (350) includes a memory (352) storing instructions and at least one processor (404) configured to execute the instructions to cause the computer system (350) to obtain sensor data, the sensor data corresponding to measurements of at least one component of an electric powertrain system (305) of at least one vehicle (300) and generate a first digital twin based on the obtained sensor data, the first generated twin associated with a type of the at least one vehicle (300).

FIG. 1A

EP 4 137 983 A1

**Description**

<u>FIELD</u>

Example embodiments are related to systems and methods for assessing degradation in drive components such as in the field of electric and hybrid vehicles and equipment.

<u>BACKGROUND</u>

A drive system for an electric or hybrid vehicle may have an engine (e.g., diesel engine), a generator coupled to the engine, a power conversion system connected to the Direct Current (DC) bus, and a motor. The power conversion system electrically couples the DC bus between the generator and the motor and motor drives one or more elements of the vehicle. The power conversion system consists of two converters. A converter is coupled electrically between the generator and the DC bus and is controlled to convert Alternating Current (AC) power into DC power during generating of the generator and DC power into AC power during motoring of the motor. The motor can be a Switched Reluctance (SR) motor, a Permanent Magnet (PM) AC Motor or an Induction AC Motor.

In an inverter-fed drive system, a power inverter is coupled electrically between the DC bus and the motor and is controlled to convert DC power from the DC bus into AC power during motoring of the motor and to convert AC power into DC power during electric braking of the motor.

In an inverter-fed electric drive system, it can be appreciated that a variety of failures can occur in the various power and control components used in the systems.

<u>SUMMARY</u>

In at least one example embodiment, a computer system includes a memory storing instructions and at least one processor configured to executed the instructions to cause the computer system to obtain sensor data, the sensor data corresponding to measurements of at least one component of an electric powertrain system of at least one vehicle and generate a first digital twin based on the obtained sensor data, the first generated twin associated with a type of the at least one vehicle.

Optionally, the at least one processor is configured to execute the instructions to cause the computer system to send the first digital twin to the at least one vehicle.

Optionally, the at least one processor is configured to execute the instructions to cause the computer system to, send the first digital twin to other vehicles of the same type of the at least one vehicle.

Optionally, the at least one processor is configured to execute the instructions to cause the computer system to, obtain additional sensor data; update the first digital twin based on the additional sensor data; and send the updated digital twin to the at least one vehicle.

Optionally, the at least one processor is configured to execute the instructions to cause the computer system to, generate a second digital twin based on the additional sensor data, the second digital twin associated with a second type of vehicle, the second type being different than the type of the at least one vehicle.

Optionally, the sensor data is data generated from one or more Internet of Things (IoT) sensors coupled to the vehicle.

Optionally, the sensor data includes temperature measurements, vibration measurements and humidity measurements associated with the at least one component of the electric powertrain system of the vehicle.

Optionally, the at least one component is a switching device of an inverter.

Optionally, the first digital twin estimates degradation of the switching device.

Optionally, the first digital twin uses a deep neural network (DNN).

In at least one example embodiment, a vehicle includes an electric powertrain system, a plurality of sensors coupled to the electric powertrain system, the plurality of sensors configured to generate sensor data, the sensor data being measurements of at least one component of the electric powertrain system, a memory storing instructions and at least one processor configured to execute the instructions to cause the vehicle to send the generated measurements to at least one server, and obtain a digital twin associated with the at least one component.

Optionally, the at least one processor configured to executed the instructions to cause the vehicle to, send additional sensor data; and receive an updated digital twin based on the additional sensor data.

Optionally, the plurality of sensors are Internet of Things (IoT) sensors.

Optionally, the sensor data includes temperature measurements, vibration measurements and humidity measurements associated with the at least one component.

Optionally, the at least one component is a switching device of an inverter.

Optionally, the digital twin estimates degradation of the switching device.

Optionally, the first digital twin uses a deep neural network (DNN).

In at least one example embodiment a vehicle comprises: an electric powertrain system; a plurality of sensors coupled to the electric powertrain system, the plurality of sensors configured to generate sensor data, the sensor data being measurements of at least one component of the electric powertrain system; a memory storing instructions; and at least one processor configured to execute the instructions to cause the vehicle to, send the generated measurements to at least one other vehicle, and obtain a digital twin associated with the at least one component.

## BRIEF DESCRIPTION OF THE DRAWINGS

Example embodiments will be more clearly understood from the following detailed description taken in conjunction with the accompanying drawings. FIGS. 1-7D represent non-limiting, example embodiments as described herein.

FIG. 1A is a diagrammatic view showing a drive system for a vehicle according to an example embodiment;
FIG. 1B is a diagrammatic view of electrical and control portions of the drive system of FIG. 1A and current measurements according to an example embodiment;
FIG. 2A illustrates a degradation modeling and failure detection generating system according to an example embodiment;
FIG. 2B(1) illustrates an example embodiment of a physical model generation system;

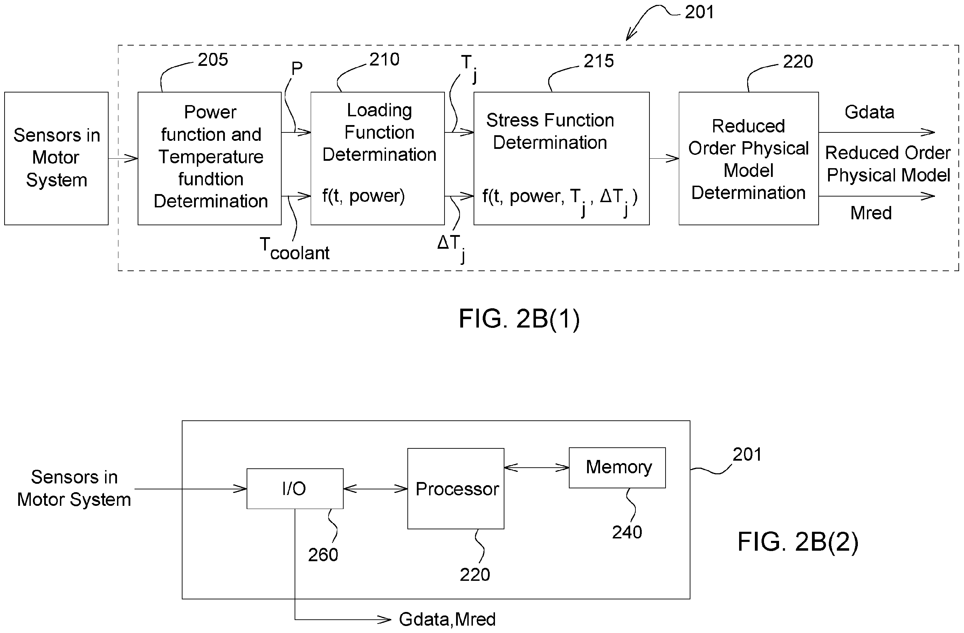

FIG. 2B(2) illustrates a structural arrangement of the physical model generation system of FIG. 2B(1) according to an example embodiment;

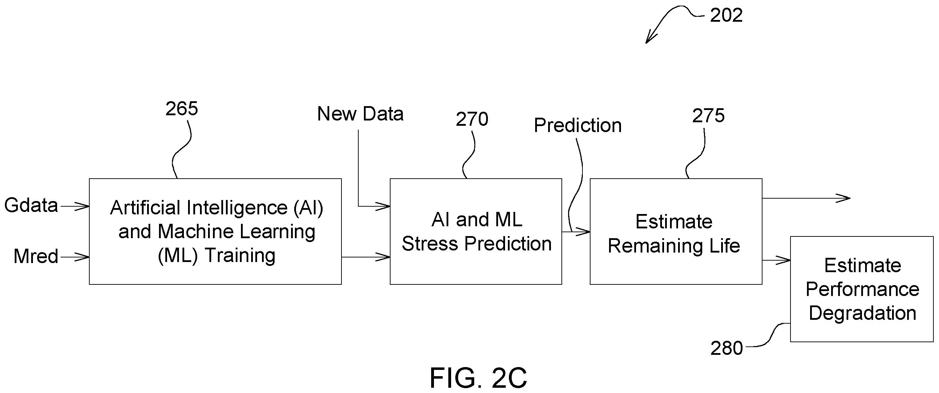

FIG. 2C illustrates an example embodiment of the digital twin model generation system;

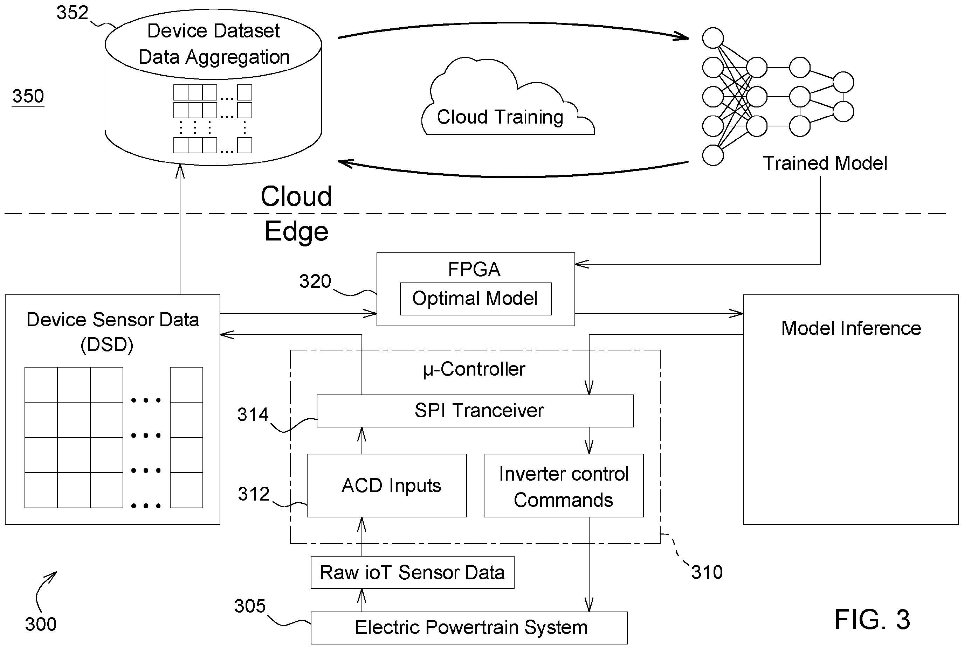

FIG. 3 illustrates a system for degradation modeling and failure detection for an inverter according to an example embodiment;

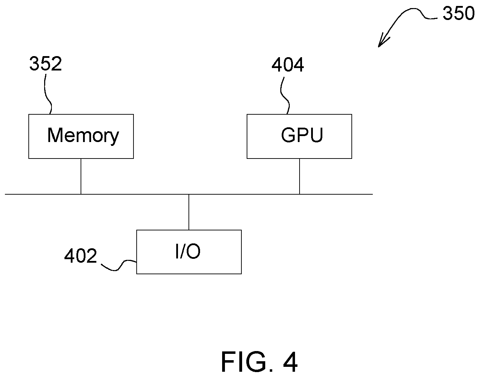

FIG. 4 illustrates a server according to at least one example embodiment;

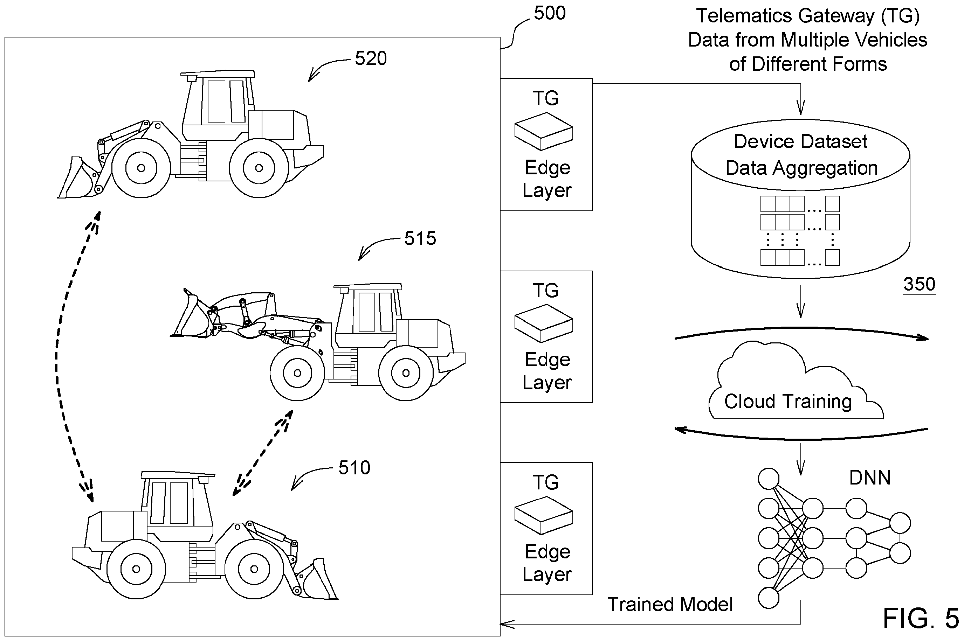

FIG. 5 illustrates a plurality of vehicles in a network according to an example embodiment;

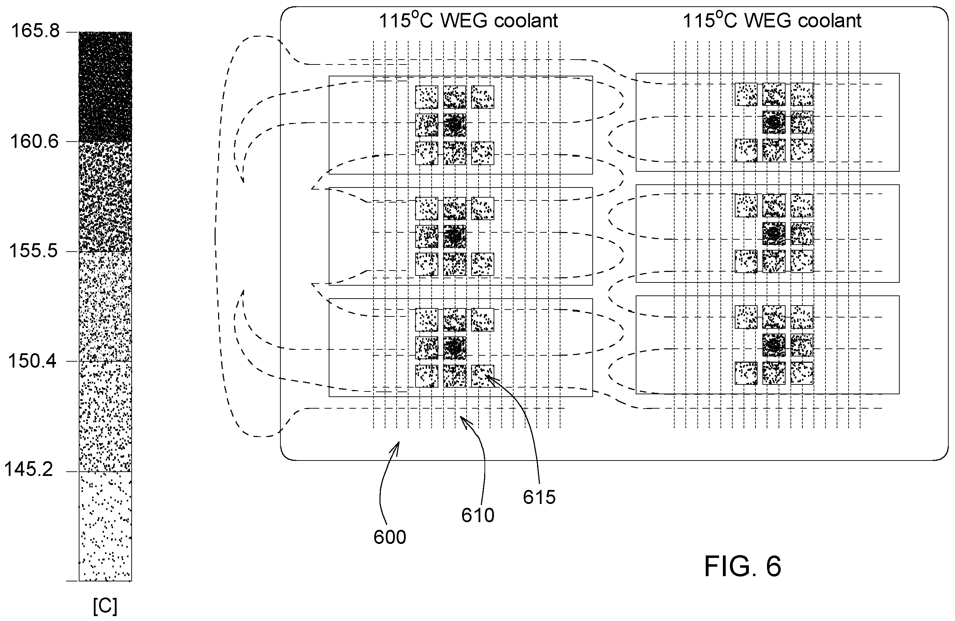

FIG. 6 illustrates an example embodiment of a temperature distribution map; and

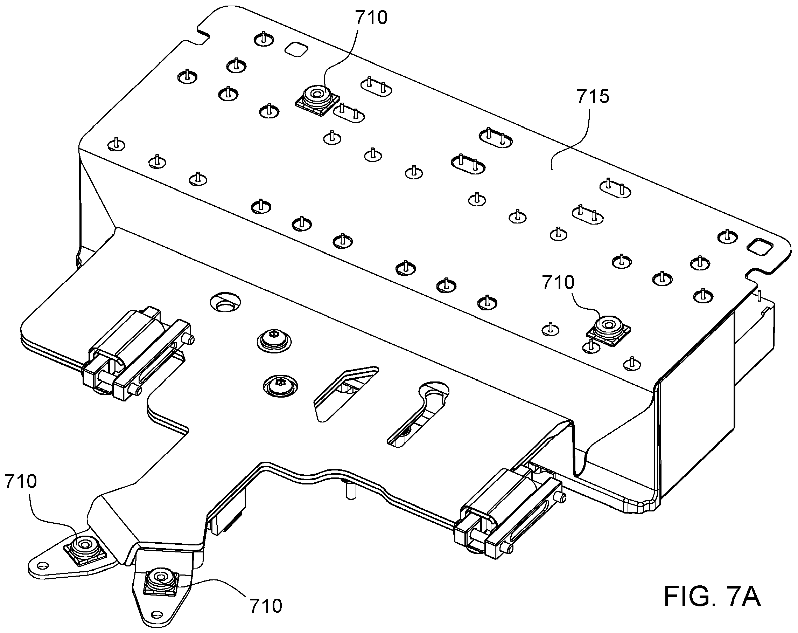

FIGS. 7A-7D illustrate example embodiments of locations of temperature sensors.

## DETAILED DESCRIPTION

Some example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/ acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation on data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware.

Such existing hardware (e.g., data processors and controllers) may be implemented using processing or control circuitry such as, but not limited to, one or more processors, one or more Central Processing Units (CPUs), one or more microcontrollers, one or more arithmetic logic units (ALUs), one or more digital signal processors (DSPs), one or more microcomputers, one or more field programmable gate arrays (FPGAs), one or more System-on-Chips (SoCs), one or more programmable logic units (PLUs), one or more microprocessors, one or more Application Specific Integrated Circuits (ASICs), or any other device or devices capable of responding to and executing instructions in a defined manner.

It should be borne in mind, however, that all of these and similar terms are to be associated with the appropriate physical quantities and are merely convenient labels applied to these quantities. Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

In this application, including the definitions below, the term 'module' may be replaced with the term 'circuit.' The term 'module' may refer to, be part of, or include processor hardware (shared, dedicated, or group) that executes code and memory hardware (shared, dedicated, or group) that stores code executed by the processor hardware.

The module may include one or more interface circuits. In some examples, the interface circuits may include wired or wireless interfaces that are connected to a local area network (LAN), the Internet, a wide area network (WAN), or combinations thereof. The functionality of any given module of the present disclosure may be distributed among multiple modules that are connected via interface circuits.

Further, at least one embodiment of the invention relates to a non-transitory computer-readable storage medium comprising electronically readable control information stored thereon, configured such that when the storage medium is used in a controller of a motor system, at least one embodiment of the method is carried out.

Even further, any of the aforementioned methods may be embodied in the form of a program. The program may be stored on a non-transitory computer readable medium and is adapted to perform any one of the aforementioned methods when run on a computer device (a device including a processor). Thus, the non-transitory, tangible computer readable medium is adapted to store information and is adapted to interact with a data processing facility or computer device to execute the program of any of the above mentioned embodiments and/or to perform the method of any of the above mentioned embodiments.

The computer readable medium or storage medium may be a built-in medium installed inside a computer device main body or a removable medium arranged so that it can be separated from the computer device main body. The term computer-readable medium, as used herein, does not encompass transitory electrical or electromagnetic signals propagating through a medium (such as on a carrier wave); the term computer-readable medium is therefore considered tangible and non-transitory. Furthermore, various information regarding stored images, for example, property information, may be stored in any other form, or it may be provided in other ways.

The term code, as used above, may include software, firmware, and/or microcode, and may refer to programs, routines, functions, classes, data structures, and/or objects.

The term memory is a subset of the term computer-readable medium. The term computer-readable medium, as used herein, does not encompass transitory electrical or electromagnetic signals propagating through a medium (such as on a carrier wave); the term computer-readable medium is therefore considered tangible and non-transitory. Non-limiting examples of the non-transitory computer-readable medium include, but are not limited to, rewriteable non-volatile memory devices (including, for example flash memory devices, erasable programmable read-only memory devices, or a mask read-only memory devices); volatile memory devices (including, for example static random access memory devices or a dynamic random access memory devices); magnetic storage media (including, for example an analog or digital magnetic tape or a hard disk drive); and optical storage media (including, for example a CD, a DVD, or a Blu-ray Disc). Examples of the media with a built-in rewriteable non-volatile memory, include but are not limited to memory cards; and media with a built-in ROM, including but not limited to ROM cassettes; etc. Furthermore, various information regarding stored images, for example, property information, may be stored in any other form, or it may be provided in other ways. The term data storage device may be used interchangeably with computer-readable medium.

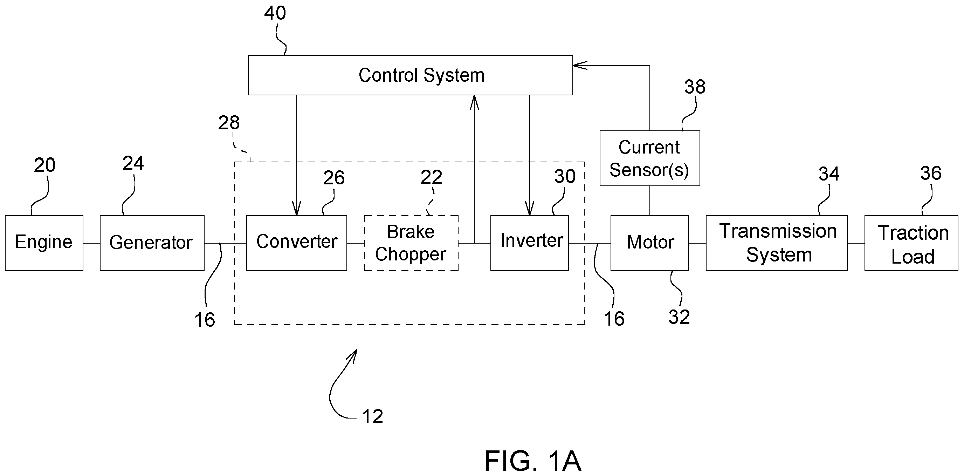

FIG. 1A illustrates an inverter-fed drive system 12 for an electric or hybrid vehicle to have an engine 20 (e.g., diesel engine), a generator 24 coupled to the engine 20, and a power conversion system 28 coupled electrically between the generator 24 and a motor 32. The power conversion system 28 is an electrical link between the generator 24 and motor 32. The power conversion system 28 includes the converter 26 and the power inverter 30. The engine 20 provides motive power for a vehicle. While not illustrates, a gearbox to convert speed and torque from the engine 20 to the generator 24. Typically, the generator 24 may take the form of a high-speed three-phase interior-permanent-magnet brushless synchronous generator having three phase windings, or other suitable form. The motor 32 may be a switched reluctance (SR) motor, a Permanent Magnet (PM) AC Motor or an Induction AC Motor.

The drive system 12 of example embodiments is well suited for diagnosing, identifying and classifying a failure of an inverter (e.g., the power inverter 30) in real-time or during an operational mode of the inverter, as opposed to a pre-test non-operational mode. In the operational mode, the inverter (e.g., the power inverter 30) is capable of converting direct current into one or more alternating current signals for application to a machine or motor for control of the machine or motor 32. In the test mode, the inverter does not provide or output one or more alternating current signals for application to a machine or motor 32.

The power conversion system 28 may have a converter 26 coupled electrically between the generator 24 and the motor 32 to convert alternating current (AC) power into DC power during a generation operating mode of the generator 24 (i.e. conversion of mechanical energy from the power source into electric energy for supply onto the power conversion system 28), and DC power into AC power during motoring of the generator 24 (i.e. removing electric energy from the power conversion system 28 and converting it into mechanical energy for the power source). The power conversion system 28 may have the power inverter 30 (e.g., a multi-phase inverter) coupled electrically between the converter 26 and the motor 32 to convert DC power from the power conversion system 28 into AC power during motoring of the motor 32 and to convert AC power into DC power during braking of the motor 32. The drive system 12 may include a brake chopper 22 to dissipate electric power from the power conversion system 28. In vehicles with a brake chopper 22 (i.e. regenerative braking), the power inverter 30 also takes power from the motor 32 during braking and stores it in batteries (not shown).

A conductor 16 (e.g., a AC bus bar) is an AC link between the power inverter 30 and the motor 32. Another conductor 16 is an AC link between the converter 26 and the generator 24.

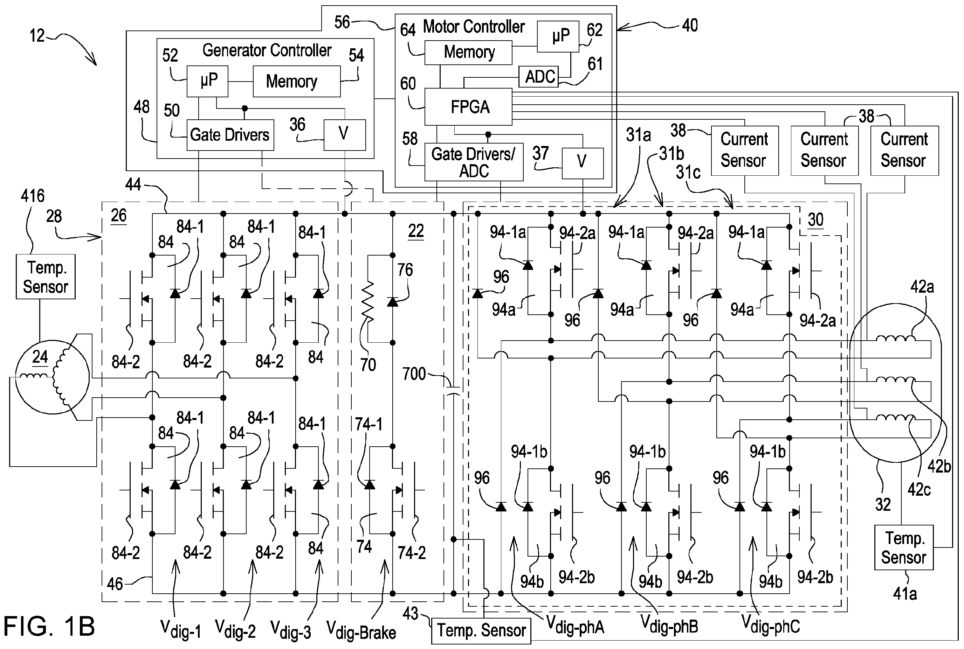

A voltage sensor 37 (shown in FIG. 1B) is coupled electrically to the power conversion system 28 to sense a DC bus voltage and output a DC bus voltage signal indicative thereof. A group of three current sensors 38 are coupled magnetically to the motor 32 to sense a phase current of the motor 32 and output a phase current signal indicative thereof. For example, the current sensors 38 may operate on the principle of magnetic field sensing, such that a realized magnetic coupling allows for an electrical isolation between high-voltage power circuits and low-voltage control circuits.

A control system 40 is coupled electrically to the voltage sensor 37 and the current sensor 38 to receive signals from the sensors pertaining to system operation. The drive system 12 may have a current sensor 38 for each phase of the motor 32. As such, if the motor 32 has a plurality of phases (e.g., three), the drive system 12 will typically have a plurality of current sensors (e.g., three), each current sensor 38 being coupled magnetically to a respective phase of the motor 32 to sense a respective phase current of the motor 32 and output a respective phase current signal indicative thereof. The control system 40 is coupled electrically to each of the current sensors 38. Additionally, it can be appreciated that the drive system 12 can have more than more components than shown in FIG. 1A.

A transmission system 34 may transfer power from the motor 32 to a traction load 36 (e.g., vehicle wheels).

Referring to FIG. 1B, details of the electrical components of the drive system 12 can be seen in greater detail. The power conversion system 28 has a positive DC power rail (high-side line) 44 and a negative DC power rail (low-side line) 46. In the drive system 12 under normal operation, the nominal voltage of the power conversion system 28 between the positive and negative DC power rails 44, 46 may be, for example, 700 Volts DC. However, it should be understood that the nominal voltage may be greater than or less than 700 volts DC.

The power converter 26 may be configured as an AC-DC converter to convert three-phase AC power from the generator 24, which may be a 3-phase permanent magnet (PM) generator, into DC power for the power conversion system 28, and vice versa. The digital circuit voltages into the power converter 26 for the power generator 24 are denoted as Vdig_1 for the phase 1 voltage, Vdig_2 for phase 2 voltage, and Vdig_3 for phase 3 voltage. For each phase of the voltage, Vdig_1, Vdig_2 and Vdig_3, two switch packages 84 are placed across the DC supply, and are switched on and off to generate the three phases from the motor power converter 26 to the power generator 24. Each switch package 84 includes a diode 84-1 and a MOSFET transistor 84-2. Respective switch packages 84 may be coupled to a respective one of the generator 24 phase windings to convert AC power from the respective winding into DC power on the power conversion system 28 between the positive DC power rail 44 and the negative DC power rail 46. When the appropriate voltage is applied to the gate of an MOSFET transistor 84-2 of the power converter 26, the transistor 84-2 may be activated and the drain may be coupled electrically to the emitter to supply electric power. The appropriate voltage depends on a rating of the transistor 84-2. For example, 14 V may be applied at the gate to turn the transistor 84-2 on. Negative 8 V may be applied at the gate with to turn the transistor 84-2 off. The power converter 26 may be operated in reverse if the generator 24 is to operate as a motor.

Although MOSFET transistors are shown, in any phase of the power inverter 30, the high-side switching transistor (e.g., 94-2a) and the low-side switching transistor (e.g., 94-2b) may comprise field effect transistors, complementary metal oxide semiconductors, power transistors, or other suitable semiconductor devices.

The power converter 26 is controlled by the control system 40. A generator controller 48 of the control system 40 may have gate drivers and an analog-to-digital converter (ADC) 50, a microprocessor 52 coupled electrically to the gate drivers 50, and memory 54 coupled electrically to the microprocessor 52 and having stored therein operating instructions for the microprocessor 52. The gate of each transistor 84-2 is coupled electrically to a respective gate driver 50 that is dedicated to that transistor 84-2 and may provide a low DC voltage (e.g., 24 VDC) to turn on and off that transistor 84-2. Thus, there may be a gate driver 50 for each transistor 84-2 of the power converter 26. The gate drivers 50 for the transistor 84-2 of the power converter 26 are under the control of the microprocessor 52, which may employ a pulse-width-modulation control scheme to control those gate drivers 50 and the transistor 84-2 of the power converter 26 to supply electric energy on the power conversion system 28 in the generating mode of the generator 24 and remove electric energy from the power conversion system 28 in the motoring mode of the generator 24. In example embodiments, space vector modulation may be used. However, it should be understood, that any known pulse-width-modulation scheme for drive systems may be used. Thus, for the sake of brevity, the pulse-width-modulation scheme will not be described in greater detail.

The motor 32, may be configured as a three-phase switched reluctance (SR) motor having three phase windings 42a, 42b and 42c, as shown in FIG. 1B, or may be an AC PM or Induction motor (not shown). Each power inverter 30 is coupled electrically between the motor 32 and the rails 44, 46 of the power conversion system 28. The power inverter 30 may be configured, for example, as a DC-AC inverter to convert DC power from the power conversion system 28 into three-phase AC power for the motor 32, and vice versa. The digital circuit voltages for each of motor phase windings 42a, 42b and 42c into the power inverter 30 for the motor 32 are denoted as Vdig_phA for the phase A voltage, Vdig_phB for the phase B voltage, and Vdig_phC for the phase C voltage. For each phase of the voltage, Vdig_phA, Vdig_phB and Vdig_phC, a pair of high-side and low-side switch packages 94a, 94b are placed in series across the DC supply bus, and are switched on and off to generate the power across each phase winding.

As used in this document, switch states indicate whether a properly functioning or unimpaired semiconductor device is active ("on" or "closed") or inactive ("off" or "open"). A failure of a semiconductor device to change states may result in a semiconductor device failing in an open state or a closed state, for example.

The power inverter 30 may include pairs of high-side and low-side switch packages 94a and 94b. Each high-side switch package 94a includes a diode 94-1a, a transistor 94-2a, and a power diode 96. Each low-side switch package 94b includes a diode 94-1b, a transistor 94-2b and a power diode 96. Pairs of switch packages 94a, 94b may be respectively coupled electrically to the motor 32 phase windings, 42a, 42b and 42c. As such, the power inverter 30 is depicted as having three sections, 31a, 31b and 31c, each associated with one of the phase windings 42a, 42b and 42c. The sections 31a, 31b and 31c, enable individual control of each individual phase A, B and C. In this configuration, for each section 31a, 31b and 31c, a high-side switch package 94a and a low-side switch package 94b are connected across a respective motor phase winding 42a, 42b and 42c. The high-side switch package 94a is coupled electrically to the positive DC rail 44, and the low-side switch package 94b is coupled electrically to the negative DC rail 46. When the appropriate voltage is applied to the gate of a transistor 94-2a and/or 92b of the power inverter 30, the transistor 94-2a and/or 94-2b (switch) may be activated to supply electric power to the respective winding 42a, 42b or 42c. The power inverter 30 may be operated in reverse if the motor 32 is to operate as a generator.

The power inverter 30 is controlled by the control system 40. A motor controller 56 of the control system 40 may have gate drivers 58, a field programmable gate array 60 (FPGA) coupled electrically to the gate drivers 58, a microprocessor (e.g., digital signal processor) 62 coupled electrically to the FPGA 60, and memory 64 coupled electrically to both the FPGA 60 and the microprocessor 62 and having stored therein operating instructions for the FPGA 60 and the microprocessor 62. The gate of each transistor 94-2a, 94-2b is coupled electrically to a respective gate driver 58 that is dedicated to that transistor 94-2a, 94-2b and may provide a low DC voltage (e.g., 24 VDC) to turn on and off that transistor 94-2a, 94-2b. The gate drivers 58 are under the control of the FPGA 60 which may employ a SR-motor control scheme to control the gate drivers 58, the transistor 94-2a, 94-2b, and thus, the motor 32 (including varying the amplitudes and frequencies to the motor windings 42a, 42b, 42c) so as to vary the torque output of the motor 32 when the motor 32 is in its motoring mode or to vary the electric generation capacity of the motor 32 when the motor 32 is in its braking mode. As previously stated, it can be appreciated that the drive system 12 can have more than one motor 32 and attached power inverter 30 and current sensor(s) 38 incorporated therein, and the control system 40 may have a motor controller 56 for each power inverter 30, although only one such power inverter 30 and motor controller 56 is discussed and shown.

Optionally, the drive system 12 may include a brake chopper 22 to control use of a power resistor 70 to dissipate electric power from the power conversion system 28. The brake chopper 22 may be coupled electrically between the rails 44, 46 as shown. The digital circuit voltage into the drive system 12 from the brake chopper 22 is shown as Vdig_Brake. The brake chopper 22 may include a switch package 74, with a diode 74-1 and MOSFET transistor 74-2 and a diode 76. The diode 76 may be in parallel with the power resistor 70. When the appropriate voltage is applied to the gate of the transistor 74-2 of the brake chopper 22, the transistor 74-2 may be activated to allow dissipation of electric power through the power resistor 70. The gate driver for the transistor 74-2 of the brake chopper 22 issues a power resistor control signal in the form of, for example, a pulse-width modulated voltage signal that applies the voltage to the base of the switch transistor 74-2, the voltage signal being pulse-width modulated according to a brake duty to turn the power resistor 70 ON, to dissipate electric energy from the power conversion system 28, and OFF correspondingly.

The brake chopper 22 is controlled by the control system 40. The gate driver for the transistor 74-2 of the brake chopper 22 may be one of the gate drivers 58 of the motor controller 56. Such gate driver 58 for the transistor 74-2 may be under the control of the FPGA 60 of the motor controller 56 to control that gate driver 58, the transistor 74-2, and the brake resistor 70. In other example embodiments, the gate driver for the transistor 74-2 may be one of the gate drivers 50 of the generator controller 48. In such a case, that gate driver 50 may be under the control of the microprocessor 52 of the generator controller 48 to control that gate driver 50, the transistor 74-2, and the brake resistor 70.

The drive system 12 may have one or more voltage sensors coupled to the positive DC rail 44 of the power conversion system 28 to sense the DC bus voltage. The DC bus voltage is the voltage across the rails 44 and 46. In some example embodiments, voltage sensors are also coupled to the negative DC rail 46 of the power conversion system 28 and configured to sense the phase voltages for phases A, B and C. Voltage sensors 36 may be stand-alone sensors or may be incorporated into any of the controllers 48, 56 in the control system. For example, one voltage sensor 37 may be for the generator 24 and another voltage sensor 37 may be used for motor control and pole voltage measurements. The voltage sensor 37 may send a signal to the control system 40 including the sensed DC bus voltage level.

The drive system 12 may further include a temperature sensors 41a-41b. A temperature sensor 41a senses the temperature of the rotor permanent magnet or magnets. In an example embodiment, the temperature sensor 41a may include one or more sensors located on the stator, in thermal communication with the stator, or secured to the housing of the motor 32. For example, the temperature sensor 41a may be or include a thermistor and wireless transmitter like infrared thermal sensor mounted on the rotor or the magnet, where the detector provides a signal (e.g., wireless signal) indicative of the temperature of the magnet or magnets.

A temperature sensor 42a senses the temperature(s) of the windings of the generator 24.

The temperature sensors 41-41b are located to detect hot-spot temperatures. A specific location of a hot spot may be determined by using available simulation software tools such as ANSYS Fluent and JMAG.

In some example embodiments, there may be multiple temperature sensors embedded in body of electric machine (e.g., the motor 32 and/or the generator 24).

Outputs of the current sensors 38, voltage sensor 37, temperature sensors 41a-41b and temperature sensor 43 may be digitized by an ADC 61. In turn, the output of the ADC 61 is coupled to the microprocessor 62.

A DC link capacitor 700 may be provided between the rails 44, 46. The capacitor 700 may be configured, for example, as a bank of capacitors. At least one temperature sensor 43 may measure the temperature inside the DC link capacitor and/or temperatures are points of contacts between the conductor 16 and the DC link capacitor 700.

In alternate embodiments, the windings 42a, 42b and 42c may be replaced with or represent an inductor.

Other possible feedback data includes, but is not limited to, winding temperature readings, semiconductor temperature readings of the power inverter 30, three phase voltage data, vibration date or other thermal or performance information for the system 12.

The current sensors 38, voltage sensor 37, temperature sensor 41 and temperature sensor 43 may be internet-of-things (IoT) based sensors. In some example embodiments, the drive system 12 may include IoT vibration sensors located on bolted joints.

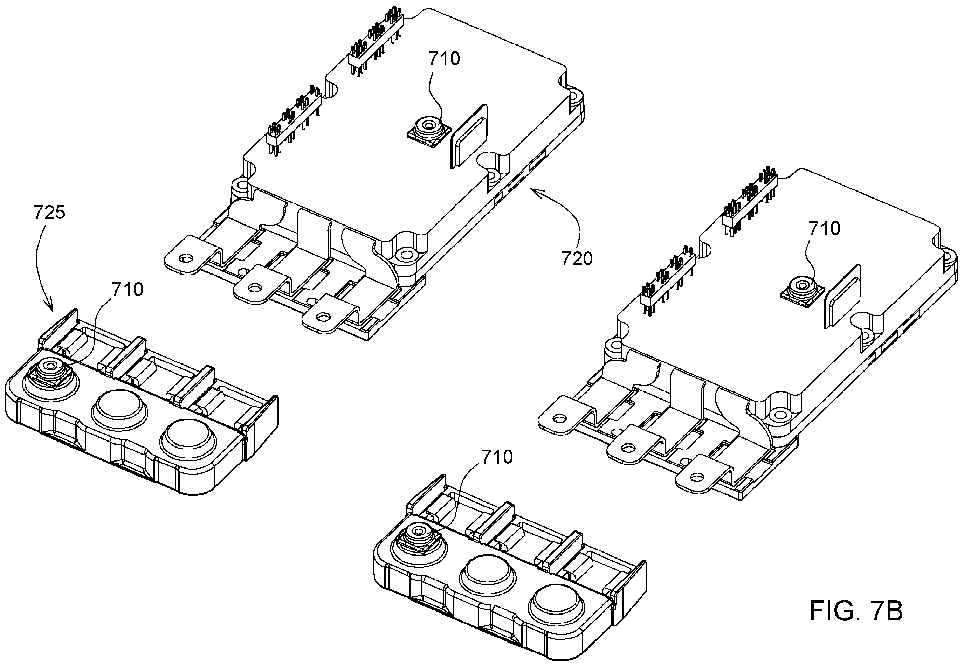

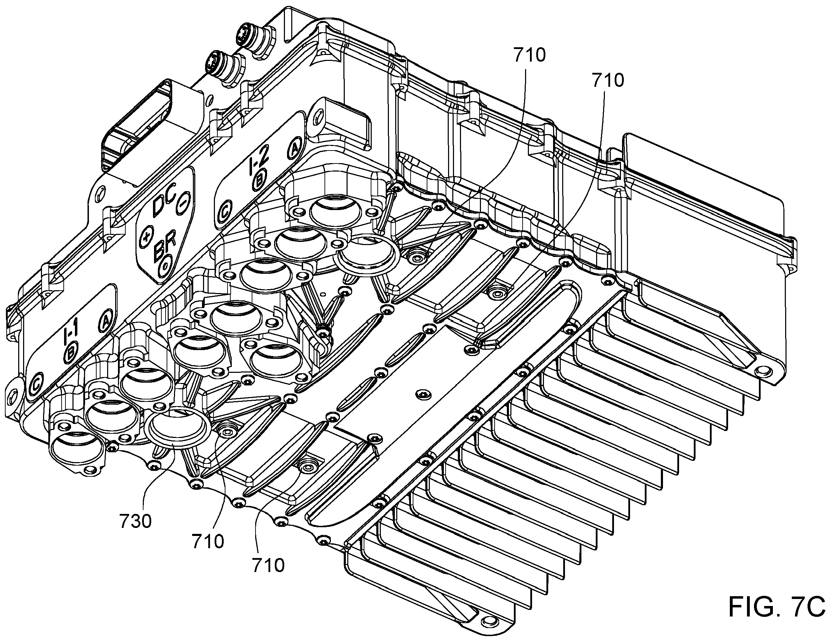

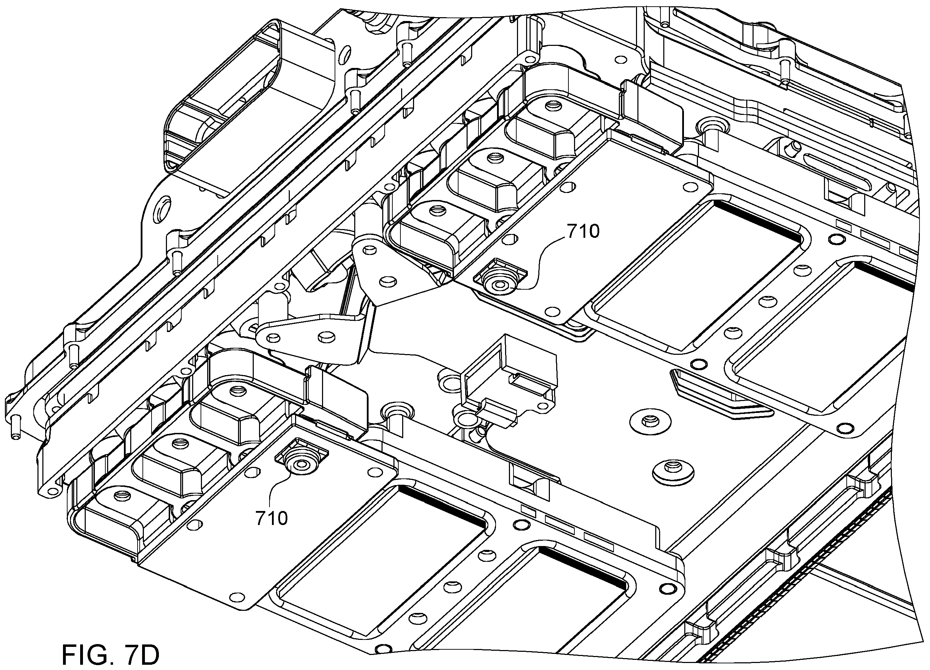

FIGS. 7A-7D illustrate example embodiments of locations of temperature sensors. The structures of an inverter power stage (including a DC bus bar and capacitor bank) shown in FIG. 7A, an SiC power module shown in FIG. 7B, cooling system assembly of the SiC inverter shown in FIG. 7C and a metallic (copper) plate to draw down heat from the SiC power modules' AC terminal is shown in FIG. 7D. These parts and features of the SiC inverter are described and illustrated in detail in U.S. Provisional Appln. No. 63/018,501, the entire contents of which are incorporated by reference.

FIG. 7A illustrates locations of temperature sensors 710 on an example capacitor bank and DC bus bar. Two of the sensors 710 are located on a laminated and planar DC bus bar 715 and the other sensors 710 are located at bolted joints, these bolted joints form power interconnects within the SiC inverter. Bolted joints may be monitored initially by an in-lab data measurement followed by real-time monitoring using a degradation model according to example embodiments. FIG. 7B illustrates a location of a temperature sensor 710 near a clamp-on power interconnect 720 between DC terminals of the SiC power module and an inverter DC bus bar 715.

FIG. 7B also shows a temperature sensor 710 on one of three AC output terminals 725 of the SiC power module. FIG. 7C illustrates temperature sensors 710 at an inlet coolant port 730 and a cooling system feature 740 (e.g., coolant channels engraved in the baseplate of the SiC power module). FIG.7C also shows temperature sensors 710 at an outlet of a coolant port 750 and a cooling system feature 760 (e.g., coolant channels engraved in the baseplate of the SiC power module). In FIG. 7B, one sensor 710 is located near a clamp-on connector 720 of a power module and another sensor 710 is on a bolted joint on an AC terminal 725. In FIG. 7C, the temperature sensors 710 are near coolant ports (e.g., inlet 730), the temperature sensors 710 are near coolant ports (e.g., outlet 750). FIG. 7D illustrates locations of temperatures sensors 710 on metallic (copper) plate 770 underneath AC terminals of the SiC power module. The temperature sensors 710 in FIG. 7D are on a metallic (copper) plate 770 attached with the inverter cooling structure to draw down heat from the SiC power modules' AC terminals. These AC terminals are shown in detail in FIG. 7B. Shown in FIG. 7D, the cooper plate 770 works as heat spreader to rapidly draw down heat produced at bolted joints with the AC terminals of the SiC power module (FIG. 7B). The temperature sensors 710 on the copper plate 770 monitor how heat is spreading vertically and horizontally and to see how at least one bolted joint at SiC power module's AC terminals is degrading with use of the inverter in the vehicle.

The measurements from the sensors in the systems may be used to develop a degradation model of inverter.

Electrification of heavy-duty vehicles allows vehicle fleet owners to realize energy efficiency and implement job automation while achieving reduction in greenhouse gas (GHG) emissions. High-performance heavy-duty off-road vehicles use power converter-fed electric machines (e-machines) (e.g., the motor system of FIG. 1A-1B) to achieve efficiency in a traction drive system. These e-machines (motor and generator) and other components contain large quantities of copper, aluminum, steel, cast iron, silicon-iron steel (laminations), and plastic, which at the end of their life, result in a large volume of material waste that could lead to a harmful economic and environmental impact. The metals and plastic components in the traction drive system are recyclable and can be reclaimed and reused as the secondary feedstock in an eco-friendly re-manufacturing of various vehicle parts. Cost savings can be achieved by reintroducing economically refurbished vehicles with eco-friendly remanufactured parts back into the market.

In an electric vehicle, components of the power converter-fed electric machines may be considered to have reached their end of life when either solder degradation or an electrical interconnect breakage occurs. Other subcomponents, such as the copper baseplate and a copper DC bus bar attached to the power module may have only consumed a fraction of their life. Similarly, copper and aluminum can be reclaimed from the motor used in the vehicle traction drive system. If successfully reclaimed, these metals could have a significant secondary life.

Despite the substantial economic and environment value of recyclable and re-manufacturable copper, aluminum, steel, cast iron, laminations, and plastic in the electric powertrain of heavy-duty vehicles, there continues to be a significant technical barrier to their recovery. There exists no automated method that can accurately predict the quality and quantity of materials for reclamation, and thereafter the remanufacturing of the electric powertrain.

An electric powertrain system may be a system that transmits a drive from an energy source (e.g., an engine) of a vehicle to an axle using electricity. As an example an electric powertrain system may include the electric generator 24, the power converter 26 extracting electrical energy electric generator 24, the DC bus, a second converter (e.g., the power inverter 30), the motor 32, and the transmission system 34, where the power converter 26 is connected to the generator 24, the second converter (e.g., the power inverter 30) is connected with the motor 32, and the motor 32 drives the transmission system 34, which applies a tractive force to the traction load 36.

Current degradation models, based on the physics-of-failure approach, consider a worst-case scenario and therefore, result in conservative estimates of lifetime predictions. Also, these current models fail to consider any vehicle-to-vehicle operational and environmental variations that can have a significant impact on their lifetime.

At least some example embodiments provide degradation modeling and failure detection of components used in an electric powertrain of heavy-duty off-road vehicles such as the power inverter 30 and motor 32, described in FIGS. 1A-1B. In at least some example embodiments, degradation modeling and failure detection is based on Artificial Intelligence (AI) and Machine Learning (ML) techniques. The AI and ML techniques may be used to implement digital twins. One sibling of the digital twins executes physical model of the electric drive's critical components and the other sibling of digital twins replicate physical behavior of these components.

The twin that replicates the physical behavior may be implemented in the cloud. The cloud based digital twin may use a Deep Neural Network (DNN) to compute data measured from a vehicle's components that are instrumented with IoT-based sensors (e.g., the current sensors 38, voltage sensor 37, temperature sensor 41 and temperature sensor 43).

The degradation modeling and failure detection in accordance with at least some example embodiments will be applicable to remanufacturing of electric powertrains used in electric and hybrid vehicles.

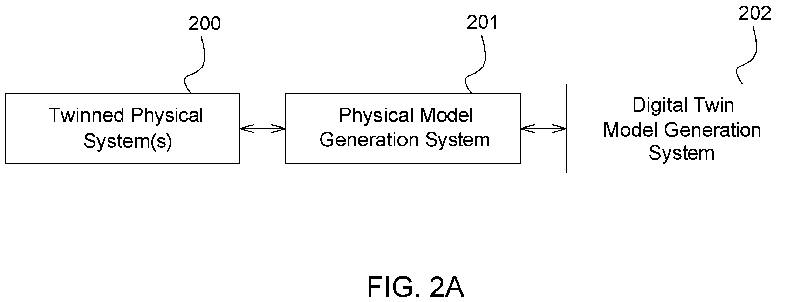

FIG. 2A illustrates a degradation modeling and failure detection generating system according to an example embodiment. As shown in FIG. 2A, the system includes at least one twinned physical system 200, a physical model generation system 201 and a digital twin model generation system.

The at least one twinned physical system 200 may be one of the components shown in FIGS. 1A-1B (e.g., the power inverter 30).

FIG. 2B(1) illustrates an example embodiment of a physical model generation system 201.

At 205, the computing system obtains sensor outputs from the motor system. For example, at 205, the system obtains outputs from the current sensors 38, voltage sensor 37, temperature sensor 41 and temperature sensor 43 and a switching rate in the power inverter 30. Other sensors that may be used to provide data to 205 may include a distributed temperature sensor for thermal stack-up of switching power devices in the power inverter 30, a temperature sensor inside a DC bus capacitor (including temperature sensors at electrical contact points (also called inverter interconnects) of the DC bus capacitors), a temperature sensor at bolted joints (bolted joints are also inverter interconnects), vibration sensors and humidity sensors (such as at electrical contacts exposed to humidity and on a surface of DC bus capacitors).

While FIG. 2B(1) is illustrated in the context of a motor system, the physical model may be determined for other types of systems having sensors to monitor data of the system.

The power function and temperature function determination may be performed by a machine intelligence interface system (MIIS). The MIIS is a data interface for ground truth generation. The MIIS is a data link to the physical degradation model that provides the output from the IoT sensors.

As used throughout the specification, a power function may refer to a function of power input to a device (e.g, an inverter, a MOSFET, etc.) and/or system. An electrical loading function may refer to what fraction of the power function causes power loss that results in temperature change.

The term power function may refer to an entire power handled by a power conversion system such as the power conversion system 28 in FIG. 1A and may be equated as:

$$\text{Power function} = f \, (\text{input voltage at the converter 26, input current to the converter 26, DC bus voltage at the converter 26, DC bus current through the converter 26, output voltage at the power inverter 30, and output current from the power inverter 30})$$

- - - - - - -

The term power loss function may be a mechanical loading function or electrical loading function (collectively referred to as loading functions) and may represent a fraction of power that causes heating. It has all power losses incurred by power conversion system 28. U.S. Patent No. 10,191,021 describe loads in the context of estimating a temperature of a transistor, the entire contents of which are incorporated by reference.

A stress function may refer to an equation that reflects stresses caused by at least one parameter variation and this parameter variation occurs due to the loading function. The at least one parameter may include temperature, vibration, moisture and/or humidity, but is not limited thereto.

Vibration by itself may be considered mechanical loading and this causes parts of an inverter assembly to move resulting in mechanical stresses. Temperature rise will also cause thermo-mechanical stresses.

Simulation tools such as ANSYS Fluent may be used to determine temperature variations caused by an electrical loading function and ANSYS Mechanical may be used to determine thermo-mechanical stresses caused by a mechanical loading function (e.g., vibration and temperature rise due the electrical loading function causing micro-movements, etc.).

In an example embodiment, the power function is a function of a measured input current and a measured input voltage of a power conversion system (e.g., the power conversion system 28). In an example, in which the transistors of the switch packages are modeled, the power loss function is determined using the method described in U.S. Patent No., 10,191,021, the entire contents of which are hereby incorporated by reference. For example, voltage and current measurements may be used to calculate power loss incurred by a switching event such as a transistor turn-on, a transistor on-state and a transistor turn-off.

A coolant temperature Tcoolant is measured by a temperature sensor.

Using the power function P and the temperature coolant function Tcoolant, the computing system determines a loading function at 210. The loading function is a function of time and the power P. The loading function determined at 210 provides an absolute junction temperature Tj and a change in junction temperature $\Delta$Tj as power is applied or withdrawn. The change in junction temperature $\Delta$Tj is a cyclic value based on the loading function of power conversion system 28 and the temperature coolant function Tcoolant. The quantity of the change in junction temperature $\Delta$Tj changes at a frequency similar to a switching frequency of the power conversion system 28 that handles the power function P. The absolute junction temperature Tj is a function of the loading function and the temperature coolant function Tcoolant.

While junction temperature is used to describe at least some example embodiments, it should be understood that example embodiments are not limited to semiconductors. For example, a high temperature location on another component may be used to measure a varying temperature for that component.

The loading function determination may be performed using at least one finite element method including known computational fluid dynamics (CFD) based simulation tools such as ANSYS Fluent. The computing system uses a load function such as an electrical loading function, which is watt loss incurred in various parts of inverter, as an input and produces two distinct outputs: (1) a temperature distribution map for power electronics components such as power devices, bolted joints, capacitor etc. and (2) thermal/temperature gradient between various layers of power devices (e.g., from switching device junction temperature to coolant/heat-sink temperature using temperature sensors). For the inverter, a temperature gradient may include a variation of temperature from devices or live power component to coolant (e.g., a heat sink) through various layers, which may be referred to as a thermal stack-up.

Load power is power supplied by the power inverter 30 to a load driven by the power inverter 30 (e.g., the motor 32). One electrical loading function is power loss incurred at points in the inverter such as power loss incurred in a power device such as a MOSFET, IGBT or other switching components and power loss incurred by inverter interconnects. The power loss incurred by the inverter interconnects may include using a voltage sensor to measure voltage drop incurred across an inverter interconnect and then multiplying the measured voltage drop with current flowing, then back checking with a temperature sensor at inverter interconnect. More specifically, power loss incurred by a device depends upon a temperature of the device. If the device temperature is known, then measuring current can aid in determining an effect of temperature in calculation of power loss.

In other example embodiments, temperature sensors may be placed around inverter interconnects. A temperature gradient can be matched up with CFD simulation data to determine power loss incurred across the inverter interconnects using ANSYS Fluent.

FIG. 6 illustrates an example embodiment of a temperature distribution map generated by the ANSYS Fluent tool. The temperature distribution map illustrates a temperature distribution of a cooling system 600 for clusters 610 of power semiconductor chipsets 615. For a three-phase standard power converter, there are total six clusters 610 of power semiconductor chipsets 615 populated on direct bonded copper (DBC) or electroplated Kapton tape. The temperature distribution map of FIG. 6 is shown in x-y plane. However, ANSYS Fluent tool can also show temperature distribution in x-y-z space.

Based on the thermal gradient, the computing system determines thermo-mechanical stresses endured by the components of motor system, such as switching power devices, bolted joints, DC bus capacitors, etc.

ANSYS Fluent may be used to determine the change in junction temperature ΔTj, ANSYS Fluent takes a geometry of the object, in this example power module shown in FIG. 6 above and a power loss function (which in this example is an electrical loading function) as input parameters and data and provide temperature the distribution map as shown in FIG. 6. A difference between an absolute temperature of a power semiconductor chipset 615 and the coolant temperature Tcoolant results in the change in junction temperature ΔTj.

The change in junction temperature ΔTj can also be measured in a lab as part of ground truth data.

Thermo-mechanical stresses experienced by component in power conversion system 28 (in FIG. 1A) are determined by learning based on data including power loss incurred in power devices, power loss incurred across inverter interconnects, vibration and a temperature gradient experienced by a stack-up temperature, coolant temperature. Stack-up temperature is a map and/or image of temperature variations from SiC MOSFET's die (or Si IGBT die) to coolant cannels underneath the SiC die (or Si IGBTY die). Temperatures from the die junction to the coolant vary and this variation is a function of electric power being handled by the inverter and ambient temperature around inverter. All this data is fed in a CFD tool (e.g., ANYSYS Mechanical) to determine stresses and once stress is known then stress can be expressed as function of the power function P (or the loading function), coolant temperature Tcoolant and vibration.

ANYSYS Fluent may be used to determine a temperature map. ANSYS Mechanical may be used to determine thermo-mechanical stresses caused by separate or combined loadings of a power semiconductor and any other parts of the power conversion system 28. For electrical loading, which is a power loss function that equates to electrical loading functions. Mechanical loading is due to vibration and flow of high temperature coolant underneath parts in power conversion system 28.

Thus, using the loading function (e.g., electrical loading function), the computing system may determine a stress function at 215, which is a function of time t, the power P, the absolute junction temperature Tj and the change injunction temperature ΔTj. In addition, the computing system may input the IoT sensor data to the stress function and calculate the stress within the motor system. Other considerations are also applicable and may be used to determine the stress function such as shock and vibration, humidity, etc.

At 220, the computing system determines a reduced order physical model Mred using a reduced order computation such as (e.g., polynomial or kriging model). For example, as a stress function the reduced order physical model Mred may be expressed as:

$$Y = aX1^n + bx2^m + cX3^o + \ldots\ldots$$

where a, b and c, represent a new power, a new temperature and a new vibration, respectively, where "new" means a change that causes a swing in temperature (e.g., a change from an original temperature). The exponents n, m and o may be determined based on empirical data reflecting the significance of impact of each of a, b and c, respectively.

This equation came from lots of data collection. Once the equation is established to approximately represent stress, then any additional data received for temperature, vibration, humidity, etc., that additional data will be included in the stress function above to determine stress caused by the additional data.

Using the power inverter 30 as an example, a SiC inverter uses a bus bar (e.g., conductor 16) that is insulated with a material which is prone to degradation at high ambient temperatures. Multi-physics based numerical simulations that capture the physics of failure mechanisms of the SiC inverter and bus bar are performed to generate the physical model. For example, an electro-thermal-mechanical model (power function and temperature function determination at 205, loading function determination at 210 and stress function determination at 215) of the SiC inverter is determined. The electro-thermal-mechanical model uses electrical parameters from sensors as inputs and outputs of the electro-thermal-mechanical model are temperature gradients and stress values in the stack-up of the SiC inverter and the bus bar. The electro-thermal-mechanical model represents combined stresses experienced by electrical (power), thermal (temperature, which come from ambient and coolant) and mechanical loadings. The physical model may be the same as the electro-thermal-mechanical model.

Multiple simulations with varying loads and boundary conditions are performed conducted to create a large dataset, which can then be used to form a reduced order or surrogate model of the SiC inverter. As will be further described below, once the reduced-order model is determined, the reduced-order model can then be introduced into a digital twin platform to compute temperature and stress values under real-time operating conditions of the SiC inverter. IoT sensors embedded within an experimental SiC power module can stream current values to the digital twin platform and the reduced-order model will act as a virtual sensor for the junction temperature and stress values. The generated temperature and corresponding stress values under various operating conditions will form a dataset on which AI and ML algorithms can be applied to monitor and detect any signs of degradation in the SiC power module.

FIG. 2B(2) illustrates a structural arrangement of the physical model generation system 201 according to an example embodiment. As shown, the physical model generation system 201 includes: a memory 240; a processor 220 connected to the memory 240; and various interfaces 260 connected to the processor 220. The various interfaces 260 may constitute an input/output interface for sending/receiving data. As will be appreciated, depending on the implementation of the physical model generation system 201, the physical model generation system 201 may include many more components than those shown in FIG. 2B(2). However, it is not necessary that all of these generally conventional components be shown in order to disclose the illustrative example embodiment.

The memory 240 may be a computer readable storage medium that generally includes a random-access memory (RAM), read only memory (ROM), and/or a permanent mass storage device, such as a disk drive. The memory 240 also stores an operating system and any other routines/modules/applications for providing the functionalities of the physical model generation system 201 (e.g., the functionalities of a physical model generation system according to the example embodiments such as those described in FIG. 2B(1), etc.) to be executed by the processor 220. These software components may also be loaded from a separate computer readable storage medium into the memory 240 using a drive mechanism (not shown). Such separate computer readable storage medium may include a disc, tape, DVD/CD-ROM drive, memory card, or other like computer readable storage medium (not shown). In some example embodiments, software components may be loaded into the memory 240 via one of the various interfaces 260, rather than via a computer readable storage medium.

Instructions may be provided to the processor 220 by the memory 240. The processor 220 may be configured to carry out the instructions of a computer program by performing the arithmetical, logical, and input/output operations of the system such that the processor 220 and the memory 240 cause the physical model generation system 201 to perform the functions described herein.

As will be understood, the various interfaces 260 and programs stored in the memory 240 to set forth the special purpose functionalities of the physical model generation system 201 will vary depending on the implementation of the physical model generation system 201.

The interfaces 260 may also include one or more user input devices (e.g., a keyboard, a keypad, a mouse, or the like) and user output devices (e.g., a display, a speaker, or the like).

Referring back to FIG. 2A, the digital twin model generation system 202 uses the reduced order physical model of degradation Mred and ground truth and training data Gdata to train artificial intelligence and machine learning algorithms (the trained system).

The training data may come from at least one of the three sources: (1) data measured in a lab using on an assembly of power conversion systems 28 and the motor 32 and the generator 24; (2) simulation data from ANSYS Fluent and ANSYS Mechanical, which may enrich data started for AI/ML training based on the data measured form lab; and (3) IoT sensors fitted in power conversion systems 28 and a motor 32 and a generator 24 of vehicles and used for further simulation verification by ANSYS Fluent and ANSYS Mechanical.

The reduced order physical model of degradation Mred, e.g. the electro-thermal-mechanical model, will predict stresses and stress led degradation of failure prone parts in the inverter. The, the physical model will have sensor data as inputs and accumulated damage as output.

The ground truth may be produced by x-rays of parts or by dicing, slicing, and cross sectioning these failure prone parts that were subjected to HALT (highly accelerated life test) and often by manual inspection under electron microscope. Once ground truth is established, it will not be needed to repeat because damage accumulation predicted by the Physical model and ground truth data may be correlated with each other. As long as failure prone parts continue to be subjected same types of loading (power, temperature, vibration and humidity) either simultaneously or selectively, the physical model is able to assess the damage or degradation accumulation.

As shown in FIG. 2C, the data stream from the IoT sensors such as current measurements are input into a physical model of the powertrain that will generate degradation-related output data for training the ML algorithms. In some example embodiments, a data stream from a single motor system may be collected to train the AI and ML algorithms, while in other example embodiments, data streams from multiple motor systems may be used to capture variations between systems (e.g., vehicle-to-vehicle variations) in degradation characteristics of the electric powertrain components.

As a result, metals and plastics with less accumulated damage can be reclaimed even after the failure of other critical components. Any components that do not meet the quality requirements for remanufacturing of an electric drivetrain can be considered for possible use in a less severe environment, including sending the material for recycling. Use of example embodiments, results in a reduction of mining of new minerals needed for copper and aluminum.

For example, the AI and ML-based algorithms are trained to capture the extent of degradation of various electric powertrain components that include copper, aluminum, steel, cast iron, laminations, and plastics (by obtaining various current, voltage, temperature, etc. measurements). Additionally, continuous degradation monitoring prevents and/or reduces the likelihood of failure of components, resulting in the retention of an eco-friendly re-manufacturing of parts for an electric powertrain (e.g., a motor system).

FIG. 2C illustrates an example embodiment of the digital twin model generation system 202. At 265, the digital twin model generation system trains the artificial intelligence (AI) and machine learning (ML) algorithms. More specifically, the training at 265 includes the ground truth and training data Gdata to train artificial intelligence and machine learning algorithms and the reduced order physical model Mred.

The ground truth and training data Gdata may be compressed and used to populate data-bins. For example, a weighted average of data distributed in multidimensional space can be reduced to one data point and placed in a data bin. The data bins may be segmented to store data. If a weighted average of a large amount of data has a relatively lower center of gravity then it will be stored in a lower end data bin. Contrarily, if a weighted average of a large amount of data has a relatively higher center of gravity then it will be stored in a higher end of data bin. The data bin approach helps reduce data size including data that is stored in the cloud.

Due to the training from the data set, the AI and ML-based techniques will capture variations in degradation of the electric powertrain system from one vehicle to another vehicle. This developed database will have built in the intelligence of degradation variations due to user conditions and/or geographical locations. Upon training and availability of digital twins, this framework will be capable of becoming an automated process for degradation assessment of electric powertrain. The developed database may include data generated through (1) empirical testing (e.g., ground truth data); (2) data generated by the digital twin; and (3) real-time operation of the device (e.g., MOSFET, IGBT, inverter) on the vehicle.

In degradation modeling of at least some example embodiment, degradation modeling is initiated at a component level, e.g., failure prone parts in the inverter such as switching devices (e.g., MOSFETs, IGBTs), capacitors and bolted joints. The developed degradation models for the components are then applied to assess damage accumulation to inverter on a specific vehicle when the inverter is subjected to a mission profile (e.g., loading on the inverter due to vehicle operation). The degradation models may then be scaled to other vehicles with similar hardware in an electric drive system of a particular vehicle type. The degradation models may be adjusted for other types of vehicles using inverters of different power ratings and different mission profiles (e.g., based on known power of particular device/electric drive system and coolant temperature).

Due to the diagnostic and prognostics aspect of the proposed AI and ML-based technique, the automated degradation assessment of power devices can prolong the useful life of heavy-duty vehicles by applying controls at the user end, such as de-rating. The AI and ML algorithm training may be done in accordance with Baharani, et al., Real-time Deep Learning at the Edge for Scalable Reliability Modeling of Si-MOSFET Power Electronics Converters, IEEE Journal of Internet-of-Things for Smart Energy Systems, DOI 10.1109/JIOT.2019.2896174, the entire contents of which are hereby incorporated by reference. Example embodiments are not limited thereto and other training algorithms may be used.

Referring back to FIG. 2C, at 270, the digital twin uses the trained system generated at 265 to predict stress in a vehicle using new data from the same or similar arrangement of sensors as described above. The vehicle may be a same type of vehicle that was used to generate the physical model of degradation Mred and the ground truth and training data Gdata. The new data may include current measurements, voltage measurements and temperature measurements. Moreover, the new data may include other measurements such as vibration and humidity measurements.

At 275, the digital twin uses the predicted stress to estimate a remaining life at 275. For example, temperature rise may be used by the digital twin to estimate the remaining life. For a same power level and coolant temperature, if a part of a device (e.g., an inverter) starts getting to a higher temperature, this may be indicative of degradation and used life. The training would include many data sets from beginning to end time temperature rise starts, those will verify amount of degradation that has occurred.

Using the estimated remaining life, the digital twin estimates the performance degradation at 280. For example, at a given temperature rise (data from characterization or ground truth), if a reduction in applied power occurs, then this reduction in P (which is power handling capability of power conversion system 28) will be indicative of degraded performance. For example, using a MOSFET as an example at a life of 0 hours, a power P1 can be applied at the temperature Tcoolant and a change in junction temperature $\Delta Tj$ occurs. At a life of 12,000 hours, performance degradation maybe shown if a power P2 is applied to obtain the change in junction temperature $\Delta Tj$ temp at the same temperature Tcoolant with the power P2 being less than P1. Therefore, power conversion system 28, no longer can handle power P at given Tcoolant and allowed $\Delta Tj$, this would be indicative of degraded performance and used up life.

The estimated remaining life output at 275 and the estimated performance degradation output at 280 may be obtained by a cloud and/or at least one server in the cloud. Moreover, a memory (e.g., a memory 352) in a vehicle controller may store the estimated remaining life and the estimated performance degradation. In addition, an operator and/or maintenance scheduler (among other users of the vehicle) may have access to the estimated remaining life and the estimated performance degradation.

While the new data is shown as being input to the stress prediction at 270, it should be understood that the new data may also be used for the training at 265 to capture any new trends in real-time data.

The twin model generation system 202 may have the components of the physical model generation system 201 that are shown in FIG. 2B(2). In the twin model generation system 202, the processor may be configured to carry out the instructions of a computer program by performing the arithmetical, logical, and input/output operations of the system such that the processor and the memory cause the twin model generation system 202 to perform the functions described herein.

In at least some example embodiments, the AI and ML-based degradation modeling and damage assessment described in FIG. 2C may be built for a component of the powertrain using measured data from sensors to measure data of the component of the powertrain. The measured data then will be used to verify the accuracy of the developed physical model of the component.

FIG. 3 illustrates a system for degradation modeling and failure detection for an inverter according to an example embodiment.

As shown in FIG. 3, a vehicle 300 (e.g., a heavy-duty vehicle) includes an electric powertrain system 305 that outputs raw IoT sensor data to a microcontroller 310. In at least one example embodiment, the microcontroller 310 may be a GPU. In the example shown in FIG. 3, the raw IoT sensor data includes input and corresponding output current measurements, input and corresponding output voltage measurements and stack-up temperature measurements related to the inverter.

In at least one example embodiment, a vehicle includes an electric powertrain system, a plurality of sensors coupled to the electric powertrain system, the plurality of sensors configured to generate sensor data, the sensor data being measurements of at least one component of the electric powertrain system, a memory storing instructions and at least one processor configured to execute the instructions to cause the vehicle to send the generated measurements to at least one server, and obtain a digital twin associated with the at least one component.

In at least one example embodiment, the at least one processor configured to executed the instructions to cause the vehicle to send additional sensor data and receive an updated digital twin based on the additional sensor data.

In at least one example embodiment, the plurality of sensors are Internet of Things (IoT) sensors.

In at least one example embodiment, the sensor data includes temperature measurements, vibration measurements and humidity measurements associated with the at least one component.

In at least one example embodiment, the at least one component is a switching device of an inverter.

In at least one example embodiment, the digital twin estimates degradation of the switching device.

In at least one example embodiment, the first digital twin uses a deep neural network (DNN).

As described above, stack-up temperature is a map and/or image of temperature variations from SiC MOSFET's die to coolant cannels underneath the SiC die. Temperatures from the die junction to the coolant vary and this variation is a function of electric power being handled by the inverter and ambient temperature around inverter. Stack-up temperature may be generated using a CFD simulation followed by measurement at given Tcoolant, and P (power loading). This data may be developed by characterization and then during operation. For example, characterization means obtaining or collecting characteristics data or the characterization (e.g., at factory, laboratory, or electronics testing facility or from the transistor manufacturer) prior to commercial distribution of the characterized device/system (e.g., transistor, inverter) or prior to operation by an end user. Examples of characterization are described in U.S. Patent No. 10,191,021 and U.S. Patent No. 8,744,794, the entire contents of which are incorporated herein by reference. The characterization data or characterization may be stored in the memory 352 for retrieval and processing by a processor 404 (shown in FIG. 4).

ANSYS Fluent may be used to determine an absolute temperature, a temperature rise and a temperature gradient in x-y-z plane. ANSYS Mechanical may be used to determine thermo-mechanical stresses caused by electrical and mechanical loading.

Electrical loading is due to the power loss function and mechanical loading is due to vibration and hot coolant flowing at high-rate underneath components such as power devices, bolted joints etc.

The microcontroller 310 includes an analog-to-digital converter 312 and a transceiver 314. In some example embodiments, the microcontroller 310 is the same as the control system 40, shown in FIG. 1B. In other example embodiments, the microcontroller 310 may be a dedicated controller for run AI/ML algorithms.

The transceiver 314 sends current measurement data, voltage measurement data, temperature measurement data and change of resistance data to at least one graphics processing unit (GPU)-accelerated cloud based server 350 in a cloud. The GPU server may be referred to as a cloud device. The data is indexed by time and location (e.g., to cover variations experienced by one power conversion system to another power conversion system, from one type of vehicle to another type of vehicle and/or variations between vehicles of the same type).

The server 350 aggregates the sensor data in a memory 352. The server 350 stores current measurement data, voltage measurement data, temperature measurement data and change of resistance data from a plurality of devices.

The server treats the sensor data stored in the memory 352 as ground truth, which aids in augmenting the degradation model.

The AI platform for real-time degradation estimation training and implementation of the SiC inverter used by the server 350 uses Deep RACE as described in Baharani, et al, Real-time Deep learning at the Edge for Scalable Reliability Modeling of Si-MOSFET Power Electronics Converters, IEEE Journal of Internet-of-Things for Smart Energy Systems (DOI 10.1109/JIOT.2019.2896174), the entire contents of which are herein incorporated by reference. In some example embodiments, most, if not all, of the sensor data is processed at the edge considering available computation power in a heavy-duty vehicle (e.g., JD 644K Hybrid Loaders), and 2) secure and continual communication link.

The vehicle 300 further includes an FPGA 320. The FPGA 320 hosts a trained degradation estimation model (i.e., a digital twin) sent from the server 350. In an example embodiment, the model received from the server 350 includes degradation models (i.e., the digital twins) of all parts in the inverter that have been modeled and represents damage accumulation occurred when the inverter is subjected to new operating conditions. The cloud/server model sent from the server 350 is similar to what is stored in the FPGA 320, however, the FPGA 320 provides an immediate interface with vehicle conditions. Thus, if any updates are received by the server 350, the cloud model is updated and the cloud model will have more history and will be data rich for further training. Thus, the model stored in the FPGA 320 may be a reduced order model and a selected trained model (e.g., selected according to desired performance metrics such as accuracy of prediction of stress). In addition, the server/cloud 350 may send the selected trained model to other vehicles of the same type as the vehicle 300 and/or that have a same type of electric powertrain system as the vehicle 300. For example the selected trained model may be sent to all combines that communicate with the server/cloud 350.

In at least one example embodiment, the server/cloud 350 includes a memory storing instructions; and at least one processor configured to executed the instructions to cause the computer system to obtain sensor data, the sensor data corresponding to measurements of at least one component of an electric powertrain system of at least one vehicle, and generate a first digital twin based on the obtained sensor data, the first generated twin associated with a type of the at least one vehicle.

In at least one example embodiment, the at least one processor configured to executed the instructions to cause the computer system to send the first digital twin to the at least one vehicle.

In at least one example embodiment, the at least one processor configured to executed the instructions to cause the computer system to send the first digital twin to other vehicles of the same type of the at least one vehicle.

In at least one example embodiment, the at least one processor configured to executed the instructions to cause the computer system to obtain additional sensor data, update the first digital twin based on the additional sensor data; and send the updated digital twin to the at least one vehicle.

In at least one example embodiment, the at least one processor configured to executed the instructions to cause the computer system to generate a second digital twin based on the additional sensor data, the second digital twin associated with a second type of vehicle, the second type being different than the type of the at least one vehicle.

In at least one example embodiment, the sensor data is data generated from one or more Internet of Things (IoT) sensors coupled to the vehicle.

In at least one example embodiment, the sensor data includes temperature measurements, vibration measurements and humidity measurements associated with at least one component of an electric powertrain system of the vehicle.

In at least one example embodiment, the at least one component is a switching device of an inverter.

In at least one example embodiment, the first digital twin estimates degradation of the switching device.

In at least one example embodiment, the first digital twin uses a deep neural network (DNN).

The cloud model may be continuously upgraded by the at least one server 350 as more and more data is measured during real-time operation of the vehicle and the cloud may continuously keep refining the model including capturing variability among many vehicles that use same drivetrain and many type of drivetrain in deployed in many vehicles.

The GPU-accelerated server 350 provides an ecosystem for a database, responsible for device-specific data aggregation, and a DNN framework, that provides a library to facilitate DNN model training. The FPGA 320 hosts a customized hardware solution for real-time model inferencing at the edge. Integrating these two components together provides a closed-loop real-world simulation of the entire life cycle of the inverter.

Pre-existing datasets may be used to provide the FPGA 320 and the server 350 with inverter (or SiC power module) specific data for model inferencing, and data aggregation and training, respectively. The communication between both the FPGA 320 and the server 350, as well as intra-communication within the server (database and training), provides functional verification of the closed-loop simulation.

The real-world simulation, processing of SiC power module data at the edge for real-time inference, and data aggregation and training in the cloud, provides an AI platform, which will be capable of a prediction of the quality and quantity of material that can be reclaimed from the powertrain which is ready for remanufacturing.

The DNN model is trained using data measured by IoT sensors instrumented in the SiC inverter components. The measured data may be preprocessed and the AI-based algorithm may be altered in order to provide reliable feedback to monitor and control the health and efficiency of vitals parts in the inverter. In an example embodiment, once the trained model meets the target metric of >75% accuracy on a prediction window of 90 seconds, the server 350 will replace the existing model and dataset within the AI-ready platform. In other example embodiments, the existing model may be replaced initially when the accuracy is greater than 50% and then eventually replaced when the accuracy is at a higher level such as 75% or 90%. Moreover, the time prediction window may be adjusted and is not limited to 90 seconds.

Deep RACE moves beyond mainstream device modeling and traditional reliability analysis by combining advanced sensing solutions with cutting-edge deep learning and edge computing techniques, as shown in FIG. 3. While Deep RACE has been discussed with respect to the reliability modeling of parts used in a SiC inverter, the proposed algorithmic construct and system-level solution for real-time degradation assessment can be extended to other components of an electric powertrain (e.g., components shown in FIG. 1A).

In contrast to classical approaches, a hybrid condition-based prediction model technique will be used in the assessment of quality and quantity of reclaimable material for remanufacturing of an electric powertrain. At least some example embodiments assess the behavior of individual components in the powertrain, based on both usage history as inferred from IoT sensors' data and expected future load profiles.

A data-driven DNN model is utilized at the edge for real-time component-specific reliability prediction and modeling, while the cloud infrastructure performs high-level metadata aggregation and analysis across many components from multiple vehicles. Therefore, the models for each component will be updated based on current device operating conditions to keep track of quality and quantity of the reclaimable material for remanufacturing. The Deep Learning (DL) algorithm of Deep RACE is based on an extension of Temporal Convolutional Networks (TCN).

FIG. 4 illustrates a server according to at least one example embodiment.

As shown, the server 350 includes: a memory 352; a processor 404 (e.g., a GPU) connected to the memory 352; and various interfaces 402 connected to the processor 404. The various interfaces 402 may constitute a transceiver for transmitting/receiving data from/to the vehicle 300. As will be appreciated, depending on the implementation of the server 350, the server 350 may include many more components than those shown in FIG. 4. However, it is not necessary that all of these generally conventional components be shown in order to disclose the illustrative example embodiment.

The memory 352 may be a computer readable storage medium that generally includes a random access memory (RAM), read only memory (ROM), and/or a permanent mass storage device, such as a disk drive. The memory 352 also stores an operating system and any other routines/modules/applications for providing the functionalities of the cloud/server 350 (e.g., functionalities according to the example embodiments, etc.) to be executed by the processor 404. These software components may also be loaded from a separate computer readable storage medium into the memory 352 using a drive mechanism (not shown). Such separate computer readable storage medium may include a disc, tape, DVD/CD-ROM drive, memory card, or other like computer readable storage medium (not shown). In some example embodiments, software components may be loaded into the memory 352 via one of the various interfaces 402, rather than via a computer readable storage medium.

Instructions may be provided to the processor 404 by the memory 352. The processor 404 may be configured to carry out the instructions of a computer program by performing the arithmetical, logical, and input/output operations of the system such that the processor 404 and the memory 352 cause the server 350 to perform the functions described herein. For example, the processor 404 and the memory 352 including computer program code, the at least one memory and the computer program code configured to, with the at least one processor, cause the server to obtain sensor data, the sensor data corresponding to measurements of at least one component of an electric powertrain system of at least one vehicle; and generate a first digital twin based on the obtained sensor data, the first generated twin associated with a type of the at least one vehicle.

The various interfaces 402 may include components that interface the processor 404 with other input/output components. As will be understood, the various interfaces 402 and programs stored in the memory 352 to set forth the special purpose functionalities of the server 350 will vary depending on the implementation of the server 350.

The interfaces 402 may also include one or more user input devices (e.g., a keyboard, a keypad, a mouse, or the like) and user output devices (e.g., a display, a speaker, or the like).

Although not specifically discussed herein, the configuration shown in FIG. 4 may be utilized to implement, *inter alia,* the vehicle 300 and/or devices. In this regard, for example, the memory 352 may store an operating system and any other routines/modules/applications for providing the functionalities of the vehicle, etc. (e.g., functionalities of these elements, methods according to the example embodiments, determination of degradation, etc.) to be executed by the processor 404.

In at least some example embodiments, the digital twins take into account uncertainties caused by changes the number of IoT sensors in the component of the powertrain. Thus, at least some example embodiments capture behaviors of key components of an electric powertrain under different mission profiles, resulting in the developed technique operating only on electrical sensors that are deployed for motor control applications and could feed data (voltage and current) to physical models of key components in the electric powertrain. Such flexibility of introduced AI and ML-based degradation assessment technique will make it independent of vehicle form, applications and function, as shown in FIG. 5. In the example of FIG. 5, each vehicle includes a telematics gateway (TG) which serves as a data communication link from the vehicle to the cloud.

In at least one example embodiment, a vehicle includes an electric powertrain system, a plurality of sensors coupled to the electric powertrain system, the plurality of sensors configured to generate sensor data, the sensor data being measurements of at least one component of the electric powertrain system; a memory storing instructions; and at least one processor configured to execute the instructions to cause the vehicle to, send the generated measurements to at least one other vehicle, and obtain a digital twin associated with the at least one component.

As shown in FIG. 5, a plurality of vehicles 510, 515 and 520 may form a network 500. The server 350 may communicate with at least one of the vehicles 510, 515 and 520 through a respective edge layer. In the network 500, the vehicle 510 may send the selected train model to the vehicles 515 and 520.

In some example embodiments, the vehicle 510 may send the selected trained model to the vehicles 515 and 520 through the network 500. Additionally, the vehicle 510 may teach the vehicle 515 and 520. For example, using AI/ML backed GANN (genetic adversarial neural network) deployed in two vehicles could compete with each other and train each other depending upon condition they endure. Once more and more data and used cases becomes available, there is possibility that is less experienced AI/ML technique deployed on a new vehicle will learn from an experienced vehicle or set of vehicles that have endured far more field hours.

In the example shown in FIG. 5, the vehicle 510 is a different type of vehicle than the vehicles 515 and 520, which are the same type. Thus, in some examples, the vehicle 510 may send trained models to the vehicles 515 and 520 for components that are the same across the vehicles, 510, 515 and 520 (e.g., MOSFETs).

Example embodiments being thus described, the same may be varied in many ways. Such variations are not to be regarded as a departure from the spirit and scope of example embodiments, and all such modifications as would be obvious to one skilled in the art are intended to be included within the scope of the claims.

**Claims**

1. A computer system (350) comprising:

   a memory (352) storing instructions; and
   at least one processor (404) configured to execute the instructions to cause the computer system to,

   obtain sensor data, the sensor data corresponding to measurements of at least one component of an electric powertrain system (305) of at least one vehicle (300), and
   generate a first digital twin based on the obtained sensor data, the first generated twin associated with a type of the at least one vehicle (300).

2. The computer system (350) of claim 1, wherein the at least one processor (404) is configured to execute the instructions to cause the computer system to (350),
send the first digital twin to the at least one vehicle (300).

3. The computer system (350) of claim 1, wherein the at least one processor (404) is configured to execute the instructions to cause the computer system (350) to,
send the first digital twin to other vehicles of the same type of the at least one vehicle (300).

4. The computer system (350) of claim 1, wherein the at least one processor (404) is configured to execute the instructions to cause the computer system (350) to,

   obtain additional sensor data;
   update the first digital twin based on the additional sensor data; and
   send the updated digital twin to the at least one vehicle (300).

5. The computer system (350) of claim 4, wherein the at least one processor (404) is configured to execute the instructions to cause the computer system (350) to,
generate a second digital twin based on the additional sensor data, the second digital twin associated with a second type of vehicle, the second type being different than the type of the at least one vehicle (300).

6. The computer system (350) of claim 1, wherein the sensor data is data generated from one or more Internet of Things (IoT) sensors coupled to the vehicle (300).

7. The computer system (350) of claim 6, wherein the sensor data includes temperature measurements, vibration measurements and humidity measurements associated with the at least one component of the electric powertrain system (305) of the vehicle (300).

8. The computer system (350) of claim 7, wherein the at least one component is a switching device of an inverter.

9. The computer system (350) of claim 8, wherein the first digital twin estimates degradation of the switching device.

10. The computer system (350) of claim 9, wherein the first digital twin uses a deep neural network (DNN).

11. A vehicle (300) comprising:

   an electric powertrain system (305);
   a plurality of sensors coupled to the electric powertrain system (305), the plurality of sensors configured to generate sensor data (DSD), the sensor data being measurements of at least one component of the electric powertrain system;
   a memory storing instructions; and
   at least one processor (310) configured to execute the instructions to cause the vehicle to,
   send the generated measurements to at least one server (350), and obtain a digital twin associated with the at least one component.

12. The vehicle (300) of claim 11, wherein the at least one processor (310) configured to executed the instructions to cause the vehicle (300) to,

   send additional sensor data; and
   receive an updated digital twin based on the additional sensor data.

13. The vehicle (300) of claim 11, wherein the plurality of sensors are Internet of Things (IoT) sensors.

14. The vehicle (300) of claim 13, wherein the sensor data includes temperature measurements, vibration measurements and humidity measurements associated with the at least one component.

15. The vehicle (300) of claim 14, wherein the at least one component is a switching device of an inverter.

EP 4 137 983 A1

**FIG. 1A**

FIG. 1B

200

201

202

| Twinned Physical System(s) | ⟷ | Physical Model Generation System | ⟷ | Digital Twin Model Generation System |

FIG. 2A

EP 4 137 983 A1

201

Sensors in Motor System → Power function and Temperature fundtion Determination (205) → Loading Function Determination f(t, power) (210) → Stress Function Determination f(t, power, $T_j$, $\Delta T_j$) (215) → Reduced Order Physical Model Determination (220) → Gdata

Reduced Order Physical Model

Mred

P

$T_{coolant}$

$T_j$

$\Delta T_j$

## FIG. 2B(1)

Sensors in Motor System → I/O (260) ↔ Processor (220) ↔ Memory (240)

201

Gdata, Mred

## FIG. 2B(2)

FIG. 2C

202

Gdata → Mred → Artificial Intelligence (AI) and Machine Learning (ML) Training — 265

New Data → AI and ML Stress Prediction — 270

Prediction → Estimate Remaining Life — 275

Estimate Performance Degradation — 280

FIG. 3

EP 4 137 983 A1

350

352

404

Memory

GPU

I/O

402

FIG. 4

FIG. 5

FIG. 6

EP 4 137 983 A1

710

715

710

710

710

FIG. 7A

EP 4 137 983 A1

27

EP 4 137 983 A1

725

710

710

710

720

FIG. 7B

EP 4 137 983 A1

FIG. 7C

710

710

FIG. 7D

| | Europäisches Patentamt European Patent Office Office européen des brevets | **EUROPEAN SEARCH REPORT** | | Application Number EP 22 17 5284 |
|---|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/257683 A1 (GOVINDAPPA SURESH [US] ET AL) 13 September 2018 (2018-09-13) * abstract * * figures 1-4 * * paragraphs [0023], [0027], [0034], [0043] - [0052], [0056], [0061] * * claims 1, 5, 6, 11 * * the whole document * | 1-15 | INV. G06F30/27 G07C5/08 ADD. G06F119/02 |
| X | VENKATESAN SUCHITRA ET AL: "Health monitoring and prognosis of electric vehicle motor using intelligent-digital twin", IET ELECTRIC POWER APPLICATIONS, IET, UK, vol. 13, no. 9, 1 September 2019 (2019-09-01), pages 1328-1335, XP006081548, ISSN: 1751-8660, DOI: 10.1049/IET-EPA.2018.5732 * abstract * * sections 2, 3 * * figures 2, 4, 5, 9 * * the whole document * | 1-15 | |
| X | CN 113 125 954 A (UNIV ANHUI) 16 July 2021 (2021-07-16) * abstract * * claims 1, 8 * * paragraphs [0036], [0054] - [0059] * * figure 1 * * the whole document * | 1-15 | TECHNICAL FIELDS SEARCHED (IPC) G06F G07C |

-/--

The present search report has been drawn up for all claims

| Place of search | Date of completion of the search | Examiner |
|---|---|---|
| Munich | 10 January 2023 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

**EP 22 17 5284**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SAMATAS G G ET AL: "Predictive Maintenance -- Bridging Artificial Intelligence and IoT", ARXIV.ORG, CORNELL UNIVERSITY LIBRARY, 201 OLIN LIBRARY CORNELL UNIVERSITY ITHACA, NY 14853, 20 March 2021 (2021-03-20), XP081930480, * abstract * * figures 1, 2, 3 * * section II * * the whole document * | 1,4,6,7, 10-14 | |
| A | MOHAMMADREZA BAHARANI ET AL: "Real-time Deep Learning at the Edge for Scalable Reliability Modeling of Si-MOSFET Power Electronics Converters", ARXIV.ORG, CORNELL UNIVERSITY LIBRARY, 201 OLIN LIBRARY CORNELL UNIVERSITY ITHACA, NY 14853, 4 August 2019 (2019-08-04), XP081455407, DOI: 10.1109/JIOT.2019.2896174 * abstract * * sections 4, 6 * * the whole document * | 8,9,15 | TECHNICAL FIELDS SEARCHED (IPC) |

The present search report has been drawn up for all claims

| Place of search | Date of completion of the search | Examiner |
|---|---|---|
| Munich | 10 January 2023 | Joris, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 5284

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2023

| Patent document cited in search report | Publication date | Patent family member(s) | Publication date |
|---|---|---|---|
| US 2018257683 A1 | 13-09-2018 | NONE | |
| CN 113125954 A | 16-07-2021 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63018501
- US 10191021 B
- US 8744794 B

### Non-patent literature cited in the description

- **BAHARANI et al.** Real-time Deep Learning at the Edge for Scalable Reliability Modeling of Si-MOSFET Power Electronics Converters. *IEEE Journal of Internet-of-Things for Smart Energy Systems*
- **BAHARANI et al.** Real-time Deep learning at the Edge for Scalable Reliability Modeling of Si-MOSFET Power Electronics Converters. *IEEE Journal of Internet-of-Things for Smart Energy Systems*